# EUROPÄISCHE PATENTSCHRIFT

(11) **EP 0 837 220 B1**
(45) Veröffentlichungstag und Bekanntmachung des Hinweises auf die Patenterteilung: **23.03.2005**
(21) Anmeldenummer: 97117117.8
(22) Anmeldetag: 02.10.1997
(51) Int. Cl.: F01D 5/00, B23P 15/04, B23K 26/00, B23K 1/00, B23K 1/002, B23K 1/008, B23P 6/00

(54) **Verfahren zur Instandsetzung verschlissener Schaufelspitzen von Verdichter- und Turbinenschaufeln**
Method for restoring worn blade tips of compressor and turbine blades
Procédé de restauration des extrémités usées d'aubes de turbine et de compressor

(30) Priorität: 18.10.1996 DE 19642980
(43) Veröffentlichungstag der Anmeldung: 22.04.1998
(73) Patentinhaber: MTU Aero Engines GmbH, 80995 München (DE)
(72) Erfinder: Richter, Karl-Hermann, Dr., 85229 Markt Indersdorf (DE); Knott, Ulrich, Dr., 80997 München (DE)

(56) Entgegenhaltungen:
- US-A- 4 998 005
- US-A- 5 479 704

## Beschreibung

Die Erfindung betrifft ein Verfahren zur Instandsetzung verschlissener Schaufetspitzen von Verdichter- und Turbinenschaufeln, siehe, zum Beispiel US 5,479,704.

Die Schaufeln von Turbinen, wie etwa die Verdichter- und Turbinenschaufeln von Strahltriebwerken unterliegen einem Verschleiß, insbesondere an den Schaufelspitzen. Anstelle eines Austauschs der gesamten Turbinenschaufel wird aus Kostengründen vorzugsweise der Weg einer Instandsetzung der verschlissenen Schaufelspitzen beschritten. Derzeit erfolgt die Instandsetzung verschlissener Schaufetspitzen dadurch, daß die Schaufelspitzen mittels spanender Bearbeitung auf ein definiertes Maß abgearbeitet wird. Anschließend wird z.B. mittels Mikroplasmaauftragschweißen das fehlende Material wieder aufgebracht. Ein derartiges Verfahren ist im BWK Bd. 45 (1993), Nr. 5 - Mal, Seite 242 beschrieben. Nachteilig bel diesem Verfahren ist der mechanische Nachbearbeitungsaufwand, der um so größer ist, je breiter die Schweißraupe des aufgebrachten Materials ist.

Die Aufgabe der Erfindung ist es, ein mit geringem Arbeitsaufwand durchführbares Verfahren zur Instandsetzung verschlissener Turbinenschaufeln zu schaffen.

Diese Aufgabe wird durch das im Anspruch 1 angegebene Verfahren gelöst.

Vorteilhafte Weiterbildungen des erfindungsgemäßen. Verfahrens sind in den Unteransprüchen gekennzeichnet.

Bei einem Verfahren zur Instandsetzung verschlissener Schaufelspitzen von Turbinenschaufeln werden gemäß der vorliegenden Erfindung die folgenden Verfahrensschritte durchgeführt:
a) Entfernen der verschlissenen Schaufelspitze, so daß die Höhe des verbleibenden Restschaufelblattes einer standardisierten Höhe h entspricht;
b) Messen der Ist-Geometrie des Endes des Restschaufelblattes in der Höhe h;
c) Formen eines Reparaturprofils mit einer im wesentlichen der Differenz zwischen einer Soll-Höhe H des instandgesetzten Schaufelblatts und der standardisierten Höhe h des Restschaufelblatts entsprechenden Dicke d=H-h aus einem Reparaturmaterial mit einer der Ist-Geometrie des Endes des Restschaufelblattes entsprechenden Kontur als Reparaturprofil;
d) Anbringen des Reparaturprofils an dem Restschaufelblatt.

Ein Vorteil des erfindungsgemäßen Verfahrens ist es, daß verschlissene Turbinenschaufeln präzise erneuert werden, wobei bei der Instandsetzung einer größeren Anzahl von Schaufeln diese alle in gleicher Weise erneuert werden. Ein weiterer Vorteil des erfindungsgemäßen Verfahrens ist es, daß aufgrund der Durchführung gleicher Verfahrensschritte für alle zu erneuernden Schaufeln einer Turbine oder Verdichters die einzelnen Verfahrensschritte wesentlich rationalisiert und damit kostengünstig ausgeführt werden können.

Das Entfernen der verschlissenen Schaufelspitze kann durch spanende Bearbeitung erfolgen.

Vorzugsweise wird das Entfernen der verschlissenen Schaufelspitze durch Laserstrahlschneiden vorgenommen.

Das Reparaturprofil wird vorzugsweise durch Schneiden eines Blechs mit der Dicke d hergestellt.

Vorteilhafterweise ist dabei vorgesehen, daß das Schneiden des Blechs zur Herstellung des Reparaturprofils als Laserstrahlscbmeiden vorgenommen wird.

Vorteilhafterweise erfolgt das Messen der Ist-Geometrie durch Bildverarbeitung.

Gemäß einer Ausbildung des erfindungsgemäßen Verfahrens ist es vorgesehen, daß die durch Bildverarbeitung gemessene Ist-Geometrie in ein CNC-Laserschneidprogramm zur nummerischen Steuerung des Laserstrahlschneidens zur Herstellung des Reparaturprofils übernommen wird.

Das Anbringen des Reparaturprofils an dem Restschaufelblatt kann durch Schweißen erfolgen.

Vorteilhafterweise wird ein solches Schweißen als Induktionsschweißen vorgenommen.

Gemäß einer besonders vorteilhaften Ausbildung der Erfindung wird das Anbringen des Reparaturprofils an dem Restschaufelblatt durch Löten vorgenommen.

Das Löten kann als Ofenlötung durchgeführt werden.

Vorteilhafterweise wird das Löten als Induktionslötung durchgeführt.

Gemäß einer besonders vorteilhaften Ausbildung des erfindungsgemäßen Verfahrens, bei dem das Anbringen des Reparaturprofils an dem Restschaufelblatt durch Löten erfolgt, wird das Löten unter Verwendung von Lot in Form einer Lötfolie mit einer Dicke Δ durchgeführt, wobei die Dicke Δ der Lötfolie bei der Bemessung der Dicke d des Blechs für das Reparaturprofil berücksichtigt wird, d=H-h-Δ.

Vorteilhafterweise wird die Lötfolie mit einer dem Profil des Restschaufelblatts bzw. des Reparaturteils entsprechenden Kontur geschnitten.

Das Schneiden der Lötfolie wird vorteilhafterweise mittels Laserstrahlschneiden ausgeführt.

Von Vorteil ist es, das Löten mit einem definierten Anpreßdruck vorzunehmen.

Erforderlichenfalls kann es vorgesehen werden, die Schweißnaht bzw. Lötnaht nach dem Anbringen des Reparaturprofils an dem Restschaufelblatt nachzuarbeiten.

Gemäß einem Aspekt der Erfindung erfolgt das Schneiden des Blechs zur Herstellung des Reparaturprofils unter zweidimensionaler Schnittführung mit einem Schnittwinkel von 90° zur Blechoberfläche. Der Vorteil hiervon ist, daß das Schneiden des Blechs mit geringem Aufwand vorgenommen werden kann.

Gemäß einem anderen, alternativen Aspekt der Erfindung wird das Schneiden des Blechs zur Herstellung des Reparaturteils unter dreidimensionaler Schnittführung mit einem an jedem Punkt der Kontur des Reparaturprofils an den Verlauf des Profils des Restschaufelblatts in der Höhe h angepaßten Schnittwinkel vorgenommen. Der Vorteil von einem solchen, aufwendigeren, Vorgehen zum Schneiden des Blechs ist es, daß die Geometrie des Reparaturprofils exakt an die Geometrie des Schaufelblatts im Bereich von deren Spitze vorgenommen werden kann, so daß die Verdichter- und Turbinenschaufel praktisch identisch mit ihrem Neuzustand instandgesetzt werden kann.

Das Schneiden des Reparaturprofils wird bei dem erfindungsgemäßen Verfahren vorzugsweise so durchgeführt, daß die Schnittspaltbreite kompensiert wird.

Das erfindungsgemäße Verfahren eignet sich mit großem Vorteil für die Verwendung zur Instandsetzung von Verdichter- und Turbinenschaufeln von Strahltriebwerken.

Im folgenden werden Ausführungsbeispiele des erfindungsgemäßen Verfahrens anhand der Zeichnung erläutert.

Es zeigen:
Fig. 1 in stark vereinfachter, schematisierter Darstellung eine Seitenansicht einer Turbinenschaufel, welche gemäß einem Ausführungsbeispiel der Erfindung instandgesetzt wird;
Fig. 2 Ansichten des Querschnitts von Soll-Geometrie und Ist-Geometrie einer Turbinenschaufel in der Höhe h der abgeschnittenen verschlissenen Schaufelspitze in stark übertriebener Form;
Fig. 3 eine stark vereinfachte, schematisierte Darstellung einer Turbinenschaufel entsprechend Fig. 1, bei der die Schaufelspitze gemäß dem erfindungsgemäßen Verfahren erneuert worden ist; und
Fig. 4 eine stark vereinfachte, schematisierte Darstellung eines Induktionslötprozesses, wie er im Rahmen des erfindungsgemäßen Verfahrens zur Instandsetzung der Spitze einer Turbinenschaufel zur Anwendung gebracht werden kann.

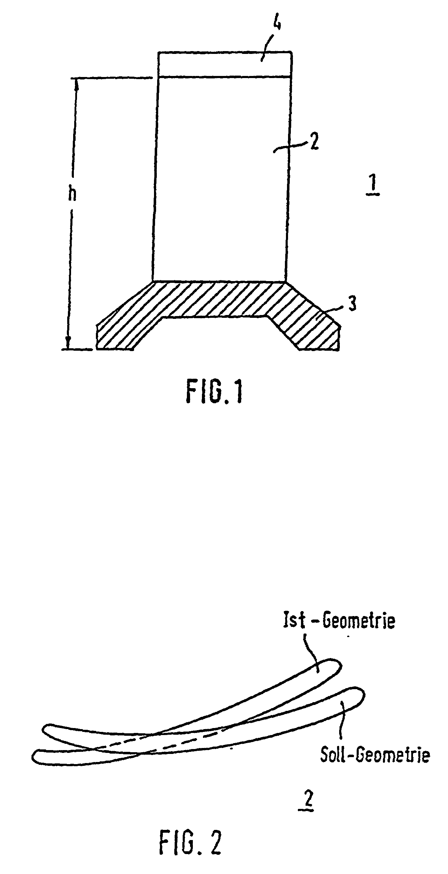

Fig. 1 zeigt in stark vereinfachter, schematisierter Darstellung eine Turbinenschaufel 1, die aus einem noch intakten Restschaufelblatt 2, einem Ansatz 3 zur Befestigung des Schaufelblatts und einer verschlissenen Schaufelspitze 4 besteht. Bis zu der von der Basis des Ansatzes 3 gemessenen Höhe h ist das Restschaufelblatt 2 noch brauchbar, während die Schaufelspitze 4 aufgrund ihres Verschleisses der Erneuerung bedarf.

Die Instandsetzung der verschlissenen Schaufelspitze 4 erfolgt in der Weise, daß zunächst die verschlissene Schaufelspitze 4 in der Höhe h des Schaufelblatts 2 entfernt wird. Diese Höhe h soll als standardisierte Höhe bezeichnet werden, da bei der Instandsetzung mehrerer Turbinenschaufeln desselben Verdichters oder derselben Turbine diese alle in der gleichen Höhe h abgeschnitten werden. Das Entfernen der verschlissenen Schaufelspitze 4 erfolgt durch spanende Bearbeitung oder vorzugsweise mittels Laserstrahlschneiden.

Wie aus Fig. 2 ersichtlich ist, welche den Querschnitt der Turbinenschaufel 1 in der Höhe h zeigt, kann der Querschnitt der Turbinenschaufel in der Höhe h in seiner tatsächlichen Ist-Geometrie von der gewünschten Soll-Geometrie abweichen, wobei diese Abweichung in Fig. 2 zum Zwecke der Verdeutlichung stark übertrieben dargestellt ist. Neben Lageabweichungen, welche im Hinblick auf die Erneuerung der Schaufelspitze keine Rolle spielen, können sich auch Formabweichungen ergeben, welchen bei der Erneuerung der verschlissenen Schaufelspitze Rechnung zu tragen ist. Dazu wird die tatsächliche Ist-Geometrie des Endes des Restschaufelblatts 2 in der standardisierten Höhe h gemessen. Diese Messung erfolgt vorzugsweise durch ein Bildverarbeitungsverfahren, bei welchem die Ist-Geometrie numerisch erfaßt und die gewonnenen Daten für eine numerische Steuerung der weiteren Bearbeitungsschritte verwendet werden, sofern die Abweichung zwischen Ist- und Soll-Geometrie innerhalb einer vorgegebenen Toleranz liegt. Falls diese Abweichung die Toleranz überschreitet, wird die Turbinenschaufel entweder in größerem Umfang repariert oder vollständig erneuert.

Als nächstes wird aus einem geeigneten Reparaturmaterial ein exakt zur Schaufelspitze des Restschaufelblatts 2 passendes Reparaturprofil geschnitten. Dieses Blech hat eine solche Dicke, daß die Gesamthöhe H des Schaufelblatts nach dessen Instandsetzung einer gewünschten Soll-Höhe H entspricht. Das Blech wird so geschnitten, daß die Kontur des dabei erhaltenen Reparaturprofils 4a der Ist-Geometrie am Ende des Restschaufelblatts 2 in der standardisierten Höhe h entspricht. Dafür werden die beim Messen der Ist-Geometrie erhaltenen Daten verwendet. Das Schneiden der Kontur des Reparaturprofils 4a erfolgt vorzugsweise durch einen CNC-gesteuerten Laserschneidprozeß unter numerischer Steuerung durch die beim Messen der Ist-Geometrie erhaltenen Daten. Die Dicke d des Blechs entspricht im wesentlichen der Differenz zwischen der Soll-Höhe H des Schaufelblatts 1 nach dessen Instandsetzung und der standardisierten Höhe h des Restschaufelblatts 2.

Das Schneiden des Blechs zur Herstellung des Reparaturprofils 4a kann entweder unter zweidimensionaler Schnittführung erfolgen, wobei zwischen der Schnittkante und der Blechoberfläche ein konstanter Schnittwinkel von 90° eingehalten wird. wahlweise kann das Schneiden unter dreidimensionaler Schnittführung erfolgen, wobei der Schnittwinkel an jedem Punkt der Kontur des Reparaturprofils 4a so gewählt ist, daß er mit dem Verlauf des Profils des Restschaufelblatts 2 in der Höhe h übereinstimmt, so daß das Reparaturprofil 4a nicht nur in der Kontur seines Querschnitts an die Schnittfläche am Ende des Restschaufelblatts 2 angepaßt ist, sondern daß auch der Verlauf des Schaufelprofils vom Restschaufelblatt 2 zu dem Reparaturprofil 4a glatt fortgesetzt wird. In jedem Fall wird beim Schneiden des Reparaturprofils 4a ein Aufmaß zur Kompensation der Schnittspaltbreite berücksichtigt.

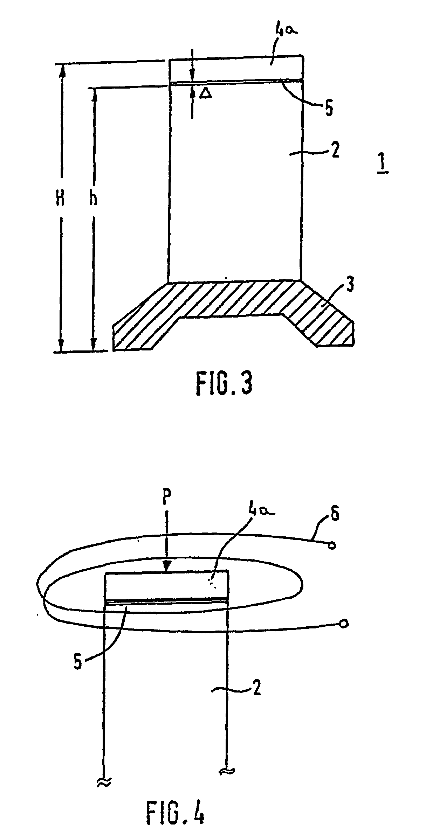

Schließlich wird das Reparaturprofil 4a unter exakter Ausrichtung der Konturen des Reparaturprofils 4a und des Endes des Restschaufelblatts 2 an dieses angesetzt und mit diesem verbunden. Dieses Verbinden kann wahlweise durch Schweißen oder durch Löten erfolgen. Im Falle des Schweißens ist ein Induktionsschweißen vorzuziehen. Vorzugsweise wird das Verbinden aber durch Löten vorgenommen, wobei das Löten als Ofenlötung oder als Induktionslötung durchgeführt werden kann. Vorzugsweise erfolgt das Löten unter Verwendung von Lot in Form einer Lötfolie 5, welche eine bestimmte Dicke Δ hat, vgl. Fig. 3. Die Dicke Δ der Lötfolie ist zusammen mit der Dicke d des zur Herstellung des Reparaturprofils 4a verwendeten Blechs so bemessen, daß die standardisierte Höhe h des Restschaufelblatts 2 zusammen mit der Dicke d des Reparaturprofils 4a und der Dicke Δ der Lötfolie 5 die Soll-Höhe H des Schaufelblatts 1 nach dessen Instandsetzung ergibt, oder anders ausgedrückt, d=H-h-Δ.

Vorzugsweise wird die Lötfolie 5 vor dem Lötvorgang mit einer solchen Kontur zugeschnitten, daß diese der Kontur des Restschaufelblatts 2 in der Höhe h bzw. der Kontur des Reparaturprofils 4a entspricht. Dieses Zuschneiden der Lötfolie wird vorzugsweise mittels Laserstrahlschneiden ausgeführt, wobei wiederum die bei der Messung der Ist-Geometrie des Querschnitts des Restschaufelblatts 2 in der Höhe h gewonnenen Daten verwendet werden. Das Löten erfolgt sodann unter Schutzgas oder im Vakuum, wobei das Reparaturprofil 4a mit einem definierten Anpreßdruck gegen das Ende des Restschaufelblatts 2 gepreßt wird. Sollte eine Lötfolie verwendet werden, deren Dicke sich unter dem Anpreßdruck vermindert, so ist unter der oben genannten Dicke Δ der Lötfolie diejenige zu verstehen, welche sich unter dem Anpreßdruck ergibt.

Nach dem Verbinden des Reparaturprofils 4a und des Restschaufelblatts 2 wird erforderlichenfalls die Nahtstelle nachbearbeitet, so daß sich ein völlig glatter, präziser Übergang ergibt.

Vorzugsweise aber wird die Lötfolie so bemessen, daß auf eine Nachbearbeitung der Lötnaht verzichtet werden kann.

Fig. 4 zeigt in stark vereinfachter, schematisierter Darstellung eine Anordnung zur Durchführung des Induktionslötens zur Verbindung des Reparaturprofils 4a und des Restschaufelblatts 2. Im Bereich der Verbindungsstelle der beiden Teile ist eine Induktionsspule 6 vorgesehen, welche mit einem Hochfrequenzstrom gespeist wird, so daß sich das Ende des Restschaufelblatts 2 und das Reparaturprofil 4a sowie die dazwischen befindliche Lötfolie 5 auf eine zur Durchführung der Lötung geeignete Temperatur erhitzen. während des Lötvorgangs und bis zur Erkaltung der Lötstelle wird das Reparaturprofil 4a in der vorher genannten Weise mit einem Anpreßdruck p gegen das Ende des Restschaufelblatts 2 gepreßt.

Das erfindungsgemäße Verfahren eignet sich insbesondere zur Instandsetzung der Schaufelblätter von Verdichtern und Turbinen von Strahltriebwerken.

## Patentansprüche

1. Verfahren zur Instandsetzung verschlissener Schaufelspitzen (4) von Verdichter- und Turbinenschaufeln (1), bei dem die Schaufelspitze (4) entfernt wird und ein Reparaturprofil (4a) an dem verbleibenden Restschaufelblatt (2) angebracht wird und wobei die Höhe des verbleibenden Restschaufelblattes (2) einer standardisierten Höhe h entspricht, **dadurch gekennzeichnet, daß** das Verfahren die weiteren Schritte umfaßt:
a) Messen der Ist-Geometrie des Endes des Restschaufelblattes (2) in der Höhe h; und
b) Formen eines Reparaturprofils (4a) mit einer im wesentlichen der Differenz zwischen einer Soll-Höhe H des instandgesetzten Schaufelblatts und der standardisierten Höhe h des Restschaufelblatts (2) entsprechenden Dicke d=H-h aus einem Repareturmaterial mit einer der Ist-Geometrie des Endes des Restschaufelblattes (2) entsprechenden Kontur.

2. Verfahren nach Anspruch 1, **dadurch gekennzeichnet, daß** das Entfernen der verschlissenen Schaufelspitze (4) durch spanende Bearbeitung erfolgt.

3. Verfahren nach Anspruch 1, **dadurch gekennzeichnet, daß** das Entfernen der verschlissenen Schaufelspitze (4) durch Laserstrahlschneiden erfolgt.

4. Verfahren nach Anspruch 1, 2 oder 3, **dadurch gekennzeichnet, daß** das Reparaturprofil (4a) durch Schneiden eines Blechs mit der Dicke d hergestellt wird.

5. Verfahren nach Anspruch 4, **dadurch gekennzeichnet, daß** das Schneiden des Blechs zur Herstellung des Reparaturprofils (4a) als Laserstrahlschneiden vorgenommen wird.

6. Verfahren nach Anspruch 1, 2, 3, 4 oder 5, **dadurch gekennzeichnet, daß** das Messen der Ist-Geometrie durch Bildverarbeitung erfolgt.

7. Verfahren nach Anspruch 5 oder 6, **dadurch gekennzeichnet, daß** die durch Bildverarbeitung gemessene Ist-Geometrie in ein CNC-Laserschneidprogramm zur geomerischen Steuerung des Laserstrahlschneidens zur Herstellung des Reparaturprofils (4a) übernommen wird.

8. Verfahren nach einem der Ansprüche 1 bis 7, **dadurch gekennzeichnet, daß** das Anbringen des Reparaturprofils (4a) an dem Restschaufelblatt (2) durch Schweißen erfolgt.

9. Verfahren nach Anspruch 8, **dadurch gekennzeichnet, daß** das Schweißen als Induktionsschweißen durchgeführt wird.

10. Verfahren nach einem der Ansprüche 1 bis 7, **dadurch gekennzeichnet, daß** das Anbringen des Reparaturprofils an dem Restschaufelblatt (2) durch Löten erfolgt.

11. Verfahren nach Anspruch 10, **dadurch gekennzeichnet, daß** das Löten als Ofenlötung durchgeführt wird.

12. Verfahren nach Anspruch 10, **dadurch gekennzeichnet, daß** das Löten als Induktionslötung durchgeführt wird.

13. Verfahren nach Anspruch 10, 11 oder 12, **dadurch gekennzeichnet, daß** das Löten unter Verwendung von Lot in Form einer Lötfolie mit einer Dicke Δ durchgeführt wird, wobei die Dicke Δ der Lötfolie bei der Bemessung der Dicke des Blechs für das Reparaturprofil berücksichtigt wird, d=H-h-Δ.

14. Verfahren nach Anspruch 13, **dadurch gekennzeichnet, daß** die Lötfolie mit einer dem Profil des Restschaufelblatts (2) bzw. des Reparaturprofils (4a) entsprechenden Kontur geschnitten wird.

15. Verfahren nach Anspruch 14, **dadurch gekennzeichnet, daß** das Schneiden der Lötfolie mittels Laserstrahlschneiden ausgeführt wird.

16. Verfahren nach Anspruch 13, 14 oder 15, **dadurch gekennzeichnet, daß** das Löten mit einem definierten Anpreßdruck erfolgt.

17. Verfahren nach Anspruch 8 oder 9, **dadurch gekennzeichnet, daß** die Schweißnaht nachbearbeitet wird.

18. Verfahren nach einem der Ansprüche 10 bis 16, **dadurch gekennzeichnet, daß** die Lötnaht nachbearbeitet wird.

19. Verfahren nach einem der Ansprüche 4 bis 18, **dadurch gekennzeichnet, daß** das Schneiden des Blechs zur Herstellung des Reparaturprofils (4a) unter zweidimensionaler Schnittführung mit einem Schnittwinkel von 90° zur Blechoberfläche vorgenommen wird.

20. Verfahren nach einem der Ansprüche 4 bis 18, **dadurch gekennzeichnet, daß** das Schneiden des Blechs zur Herstellung des Reparatprofils (4a) unter dreidimensionaler Schnittführung mit einem an jedem Punkt der Kontur des Reparaturprofils (4a) an den Verlauf des Profils des Restschaufelblatts (2) in der Höhe h angepaßten Schnittwinkel vorgenommen wird.

21. Verfahren nach Anspruch 19 oder 20, **dadurch gekennzeichnet, daß** beim Schneiden die Schnittspaltbreite kompensiert wird.

22. Verfahren nach einem der Ansprüche 1 bis 21, **gekennzeichnet durch** die Verwendung zur Instandsetzung von Verdichter- und Turbinenschaufeln von Strahltriebwerken.

## Claims

1. A process for repairing worn blade tips (4) of compressor and turbine blades (1) in which the blade tip (4) is removed and a repair section (4a) is fitted to the remainder (2) of the blade, the height of the remainder (2) of the blade corresponding to a standardised height (h),
**characterised in that**
the process comprises the following steps:
a) the measuring of the actual geometry of the end of the remainder (2) of the blade in the height (h), and
b) the forming of a repair section (4a) with a thickness (d=H-h) which corresponds essentially to the difference between a reference height (H) of the repaired blade and the standardised height (h) of the remainder (2) of the blade out of a repair material with contour which corresponds to the actual geometry of the end of the remainder (2) of the blade.

2. A process in accordance with claim 1,
**characterised in that**
the removal of the worn blade tip (4) is carried out by means of metal cutting.

3. A process in accordance with claim 1,
**characterised in that**
the removal of the worn blade tip (4) is carried out by means of laser beam cutting.

4. A process in accordance with claim I, 2 or 3,
**characterised in that**
the repair section (4a) is made by cutting a sheet of metal of thickness (d).

5. A process in accordance with claim 4,
**characterised in that**
the cutting of the sheet of metal to make the repair section (4a) is carried out by means of laser beam cutting.

6. A process in accordance with claim 1, 2, 3, 4 or 5,
**characterised in that**
the measurement of the actual geometry is carried out by means of image processing.

7. A process in accordance with claim 5 or 6,
**characterised in that**
the actual geometry measured by means of image processing is input into a CNC laser cutting program for the geometric control of the laser beam cutting in order to make the repair section (4a).

8. A process in accordance with one of claims 1 to 7,
**characterised in that**
the fitting of the repair section (4a) to the remainder (2) of the blade is carried out by means of welding.

9. A process in accordance with claim 8,
**characterised in that**
the welding is carried out by means of induction welding.

10. A process in accordance with one of claims 1 to 7,
**characterised in that**
the fitting of the repair profile to the remainder (2) of the blade is carried out by means of soldering.

11. A process in accordance with claim 10,
**characterised in that**
the soldering is carried out by means of furnace brazing.

12. A process in accordance with claim 10,
**characterised in that**
the soldering is carried out by means of induction soldering.

13. A process in accordance with claim 10, 11 or 12,
**characterised in that**
the soldering is carried out using solder in the form of a solder film of thickness (Δ), the thickness (Δ) of the solder film being taking into account in the measurement of the thickness of the sheet of metal for the repair section (4a), d=H-h-Δ.

14. A process in accordance with claim 13,
**characterised in that**
the solder film is cut with a contour which corresponds to the section of the remainder (2) of the blade / the repair section (4a).

15. A process in accordance with claim 14,
**characterised in that**
the cutting of the solder film is carried out by means of laser beam cutting.

16. A process in accordance with claim 13, 14 or 15,
**characterised in that**
the soldering is carried out with a defined pressure.

17. A process in accordance with claim 8 or 9,
**characterised in that**
the weld seam is finished.

18. A process in accordance with one of claims 10 to 16,
**characterised in that**
the solder seam is finished.

19. A process in accordance with one of claims 4 to 18,
**characterised in that**
the cutting of the sheet of metal for making the repair section (4a) is carried out using 2D cut guidance with a cutting angle of 90° to the surface of the sheet of metal.

20. A process in accordance with one of claims 4 to 18,
**characterised in that**
the cutting of the sheet of metal for making the repair section (4a) is carried out using 3D cut guidance with a cutting angle which is adapted in terms of the height (h) to the course of the section of the remainder (2) of the blade at each point on the contour of the repair section (4a).

21. A process in accordance with claim 19 or 20,
**characterised in that**
compensation is made for the cutting gap width during cutting.

22. A process in accordance with claims 1 to 21,
**characterised by**
the use of compressor and turbine blades from jet engines for repair.

## Revendications

1. Procédé de restauration des extrémités (4) usées d'aubes (1) de turbine et de compresseur, dans lequel l'extrémité (4) d'aube est retirée et un profilé de réparation (4a) est posé sur le reste de la pâle d'aube (2) demeurant en place, et étant précisé que la hauteur du reste de la pâle d'aube (2) demeurant en place correspond à une hauteur h standardisée, **caractérisé en ce que** le procédé comprend les étapes suivantes :
a) mesure de la géométrie réelle de l'extrémité du reste de la pâle d'aube (2) demeurant en place dans le sens de la hauteur h ; et
b) façonnage d'un profilé de réparation (4a) avec une épaisseur d = H-h correspondant essentiellement à la différence entre une hauteur théorique H de la pâle d'aube restaurée et la hauteur standardisée h du reste de la pâle d'aube (2) demeurant en place dans un matériau de réparation ayant un contour correspondant à la géométrie réelle de l'extrémité du reste de la pâle d'aube (2) demeurant en place.

2. Procédé selon la revendication 1, **caractérisé en ce que** le retrait de l'extrémité (4) usée de l'aube est effectué par l'usinage par enlèvement de copeaux.

3. Procédé selon la revendication 1, **caractérisé en ce que** le retrait de l'extrémité (4) usée de l'aube est effectué par découpe au rayon laser.

4. Procédé selon la revendication 1, 2 ou 3, **caractérisé en ce que** le profilé de réparation (4a) est fabriqué par la découpe d'une tôle d'épaisseur d.

5. Procédé selon la revendication 4, **caractérisé en ce que** la découpe de la tôle en vue de la fabrication du profilé de réparation (4a) est assurée en tant que découpe au rayon laser.

6. Procédé selon la revendication 1, 2, 3, 4 ou 5, **caractérisé en ce que** la mesure de la géométrie réelle a lieu par traitement d'images.

7. Procédé selon la revendication 5 ou 6, **caractérisé en ce que** la géométrie réelle mesurée par traitement d'images est prise en charge dans un programme de découpe laser à commande numérique en vue de la commande géométrique de la découpe au rayon laser pour la fabrication du profilé de réparation (4a).

8. Procédé selon une des revendications 1 à 7, **caractérisé en ce que** l'application du profilé de réparation (4a) sur le reste de la pâle d'aube (2) demeurant en place a lieu par soudage.

9. Procédé selon la revendication 8, **caractérisé en ce que** le soudage est réalisé en tant que soudage par induction.

10. Procédé selon une des revendications 1 à 7, **caractérisé en ce que** l'application du profilé de réparation sur le reste de la pâle d'aube (2) demeurant en place a lieu par brasage.

11. Procédé selon la revendication 10, **caractérisé en ce que** le brasage est réalisé en tant que brasage au four.

12. Procédé selon la revendication 10, **caractérisé en ce que** le brasage est réalisé en tant que brasage par induction.

13. Procédé selon la revendication 10, 11 ou 12, **caractérisé en ce que** le brasage est réalisé en utilisant un métal d'apport de brasage ayant la forme d'un film de brasage d'une épaisseur Δ, sachant que l'épaisseur Δ du film de brasage est prise en compte lors de la mesure de l'épaisseur de la tôle pour le profilé de réparation (4a), d=H-h-Δ.

14. Procédé selon la revendication 13, **caractérisé en ce que** le film de brasage est découpé avec un contour correspondant au profilé du reste de la pâle d'aube (2) demeurant en place et/ou du profilé de réparation (4a).

15. Procédé selon la revendication 14, **caractérisé en ce que** la découpe du film de brasage est réalisée au moyen de la découpe au rayon laser.

16. Procédé selon la revendication 13, 14 ou 15, **caractérisé en ce que** le brasage a lieu avec une pression appliquée définie.

17. Procédé selon la revendication 8 ou 9, **caractérisé en ce que** la soudure est finie.

18. Procédé selon une quelconque des revendications 10 à 16, **caractérisé en ce que** la brasure est finie.

19. Procédé selon une quelconque des revendications 4 à 18, **caractérisé en ce que** la découpe de la tôle pour la fabrication du profilé de réparation (4a) a lieu par guidage de coupe bidimensionnel avec un angle de coupe de 90° par rapport à la surface de la tôle.

20. Procédé selon une quelconque des revendications 4 à 18, **caractérisé en ce que** la découpe de la tôle pour la fabrication du profilé de réparation (4a) a lieu par guidage de coupe tridimensionnel avec un angle de coupe adapté, à chaque point du contour du profilé de réparation (4a), au tracé du profilé du reste de la pâle d'aube (2) demeurant en place dans le sens de la hauteur h.

21. Procédé selon la revendication 19 ou 20, **caractérisé en ce que** la largeur du jeu de coupe est compensée lors de la découpe.

22. Procédé selon une quelconque des revendications 1 à 21, **caractérisé par** l'utilisation de moteurs à réaction pour la restauration des aubes de turbine et de compresseur.
